# EUROPÄISCHE PATENTSCHRIFT

(11) **EP 0 745 043 B1**
(45) Veröffentlichungstag und Bekanntmachung des Hinweises auf die Patenterteilung: **15.04.1998**
(21) Anmeldenummer: 95910443.1
(22) Anmeldetag: 01.03.1995
(51) Int. Cl.: B62K 25/16, B62K 25/00

(54) **BREMSTAUCHAUSGLEICHSVORRICHTUNG**
BRAKING DIVE COMPENSATOR
COMPENSATEUR DE L'EFFET DE PLONGEE DU AU FREINAGE

(30) Priorität: 04.03.1994 DE 9403640 U
(43) Veröffentlichungstag der Anmeldung: 04.12.1996
(73) Patentinhaber: Koppelberg, Günter, 31785 Hameln (DE); Düwel, Norbert, 32683 Barntrup (DE)
(72) Erfinder: Koppelberg, Günter, 31785 Hameln (DE); Düwel, Norbert, 32683 Barntrup (DE)
(74) Vertreter: Körner, Peter
(86) Internationale Anmeldenummer: DE9500291
(87) Internationale Veröffentlichungsnummer: WO9523728

(56) Entgegenhaltungen:
- DE-A- 3 833 880
- FR-A- 1 067 221
- FR-A- 2 380 181
- GB-A- 1 540 824
- US-A- 3 694 004
- PATENT ABSTRACTS OF JAPAN vol. 15 no. 447 (M-1179) ,14.November 1991 & JP,A,03 189433 (ATSUGI UNISIA CORP.) 19.August 1991,

## Beschreibung

Die Erfindung betrifft eine Bremstauchausgleichsvorrichtung in Kombination mit einer Vorderradfederung eines einspurigen Fahrzeugs nach dem Oberbegriff des Anspruchs 1.

Vorderradfederungen für einspurige Fahrzeuge werden üblicherweise mit Teleskopgabeln, geschobener Schwinge oder gezogener Schwinge ausgeführt. Gegenüber Ausführungen mit geschobener Schwinge und Teleskopgabeln besitzt eine gezogene Schwinge den Vorteil, daß die Federung besser auf Bodenunebenheiten anspricht, da die Richtung der beim Überfahren von Bodenunebenheiten auftretenden Kraftkomponenten bei der gezogenen Schwinge etwa in der Bewegungsrichtung der gezogenen Schwinge liegen, während bei geschobenen Schwingen oder Teleskopgabeln die Kraftkomponente schräg zur Bewegungsrichtung der geschobenen Schwinge bzw. der Teleskopgabeln einfällt.

Der Nachteil bei der Ausführung mit einer gezogenen Schwinge besteht allerdings darin, daß die Federung beim Bremsen des Vorderrades besonders tief eintaucht. Bei Teleskopgabeln und geschobenen Schwingen ist dieser Effekt weniger stark ausgeprägt, zumal geschobene Schwingen auch dem Eintaucheffekt entgegenwirken.

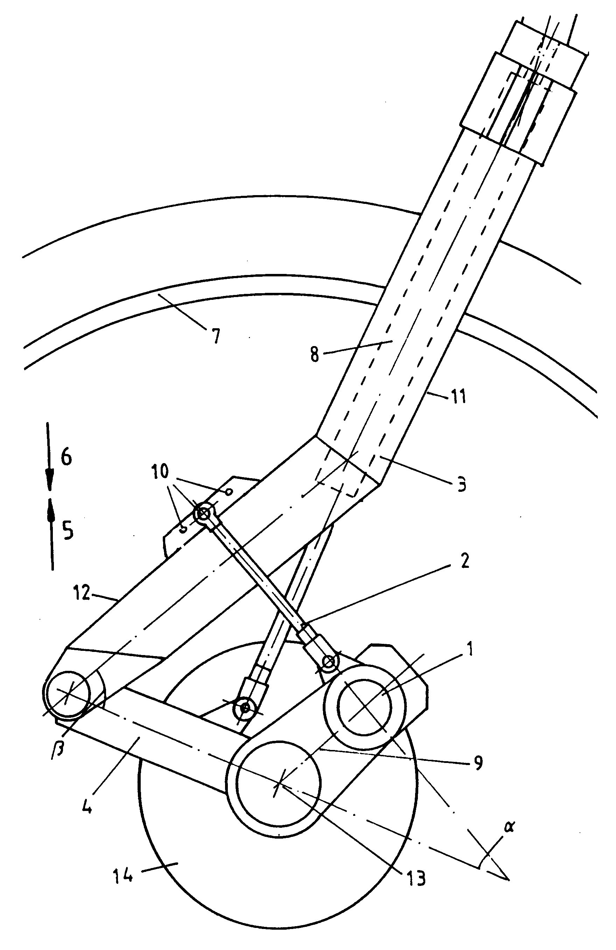

Die DE 38 33 880 A1 befaßt sich bereits mit Systemen zur Verhinderung des Eintauchens. In den Fig. 1, 2, 4 und 5 sind Anordnungen mit gezogenen Schwingen dargestellt, wovon die Figuren 1, 2 und 4 Anordnungen mit einer Felgenbremse und Fig. 5 eine Anordnung mit einer Trommelbremse zeigt. Die Erläuterungen zu Fig. 5 lassen aber die Funktionsweise dieser Ausführung nicht erkennen.

Aus der GB-A-1 540 824 ist ein Zweirad mit einer Vorderradaufhängung bekannt, bei der eine gleichmäßige Verteilung der Masse der Vorderradaufhängung vor und hinter der Radachse angestrebt wird. Da bei einer gezogenen Schwinge ausschließlich aus dem Gabelbein und dem Verbindungsglied der Massenschwerpunkt aus diesen Teilen vor der Vorderachse liegen würde, werden zum Ausgleich zwei weitere Verbindungsglieder sowie ein Federbein hinzugefügt, damit eine Gegenmasse aus diesen Gliedern hinter der Vorderradachse liegt und somit der resultierende Masseschwerpunkt aus dem Gabelbein und den Verbindungsgliedern sowie dem Federbein möglichst genau mit der Radachse übereinstimmt.

Der Erfindung liegt die Aufgabe zugrunde, eine Bremstauchausgleichsvorrichtung in Kombination mit einer Vorderradfederung eines einspurigen Fahrzeugs mit den Merkmalen des Oberbegriffs des Anspruchs 1 dahingehend zu verbessern, daß eine sichere Kompensation der beim Bremsen auftretenden Tauchkräfte erzielt wird, ohne dabei den Federweg und die Federcharakteristik einzuschränken.

Diese Aufgabe wird bei einer Bremstauchausgleichsvorrichtung nach dem Oberbegriff des Patentanspruchs 1 durch die im Kennzeichen angegebenen Merkmale gelöst.

Bei der erfindungsgemäßen Konstruktion wird der Bremsenträger nicht an der Schwinge, sondern an dem Radführungsträger abgestützt, so daß die durch den Bremsvorgang vom Bremsenträger ausgeübte Kraft in den Radführungsträger eingeleitet wird und durch die Gelenkkombination aus Schwinge, Radführungsträger, Bremsenträger und Schubstange stets eine resultierende Kraft im Radführungsträger erzeugt wird, die der Eintauchkraft aufgrund der beim Bremsen entstehenden veränderten Radlast exakt entgegenwirkt.

Dadurch bleibt auch beim Bremsen der Federkomfort voll erhalten und außerdem wird auch der Nachlauf des Vorderrades beibehalten, was eine konstante Lenkstabilität gewährleistet.

Vorzugsweise ist die Schubstange bei statischer Betriebsbelastung des Fahrzeugs etwa im rechten Winkel zu einer radial verlaufenden Mittelachse des Bremsenträgers ausgerichtet.

Unter statischer Betriebsbelastung wird der Zustand verstanden, bei dem das Eigengewicht des Fahrzeugs und das Gewicht eines Fahrers, für den die Federung ausgelegt ist, bei Stillstand oder konstanter Geschwindigkeit auf die Vorderradfederung einwirkt. Die gezogene Schwinge mit dem Federelement nimmt dann eine Position ein, in der die Ferderungsreserven etwa in beiden Richtungen gleich groß sind. Diese Position wird auch als Null-Lage bezeichnet.

Wenn die Schubstange bei statischer Betriebsbelastung des Fahrzeugs etwa tangential ausgerichtet ist, pendelt die Ausrichtung beim Ein- und Ausfedern um die tangentiale Lage, so daß eine weitgehende Linearität der zum Bremstauchausgleich aufzubringenden Kraft gewährleistet ist.

Gemäß einer Weiterbildung kann vorgesehen sein, daß an dem Radführungsträger mehrere Anlenkorte zur wahlweisen Befestigung des Schubstange vorgesehen sind. Die Winkelausrichtung kann auf diese Weise geringfügig verändert werden, so daß eine Anpassung z. B. an Fahrer unterschiedlicher Größe und Gewichtes möglich ist. Je nach Größe, Sitzhöhe und Gewicht des Fahrers kann sich nämlich ein anderer statischer Schwerpunkt ergeben, der dann auch die dynamische Radlastverteilung beim Bremsen beeinflußt.

Vorzugsweise ist der Radführungsträger in einen oberen und einen unteren, gegenüber dem oberen Bereich in Fahrtrichtung abgewinkelten Bereich unterteilt und das Federelement ist axial innerhalb des oberen Bereichs angeordnet. Diese Bauart ermöglicht eine besonders kompakte Ausführung, da einerseits der Hohlraum des Radführungsträgers zur Aufnahme des Federelementes ausgenutzt wird und zum anderen die über das Federelement in den Radführungsträger eingeleitete Kraft axial eingeleitet wird, so daß keine Querkräfte auftreten.

Das untere Ende des Federelements kann an der Schwinge in Fahrtrichtung vor oder hinter der Radachse oder am Bremsenträger angelenkt sein. Dadurch kann das Lager zwischen dem Federelement und der Schwinge bzw. dem Bremsenträger örtlich getrennt von dem Lager zwischen dem Bremsenträger und der Schwinge angeordnet werden, so daß die Lager in einer Ebene liegen können und dadurch die Konstruktion schlanker wird. Wird das untere Ende des Federelements an der Schwinge in Fahrtrichtung vor der Radachse angelenkt, ergibt sich eine Untersetzung des Radhubes auf den Federungshub, so daß der Federweg und damit auch die Baulänge des Federelements reduziert werden kann.

Das Federelement kann eine Einstellvorrichtung zur Einstellung einer konstanten Null-Lage bei unterschiedlichen statischen Betriebsbelastungen umfassen. Dadurch läßt sich die Null-Lage des Federelements und der Schwinge auch für extrem leichte oder extrem schwere Fahrer einstellen, deren Gewicht von einem Normalgewicht von ca. 75 kg für die die Federung standardmäßig ausgelegt ist, erheblich abweicht.

Die Anlenkorte der Schwinge mit dem Radführungsträger, des Bremsenträgers mit der Schwinge sowie der Schubstange mit dem Bremsenträger und dem Radführungsträger sind als Gleit- oder Wälzlager ausgeführt. Dadurch wird ein besonders leichtes Ansprechen der Federung auch bei geringen oder kurzwelligen Bodenunebenheiten gewährleistet und ebenfalls die Kompensation der Bremstauchkräfte bei Lastwechseln verbessert.

Der Radführungsträger kann einschenklig oder zweischenklig ausgebildet sein Bei der einschenkligen Ausführung entfallt das Problem der exakten Abstimmung der Federungscharakteristiken zweier Feder- und Dämpferelemente, was bei fehlender Synchronisation zu einem Verkanten und damit zu einer schwergängigen Reaktion führen könnte.

Bei der zweischenkligen Ausführung können die Feder- und Dämpferelemente sowie die Lager einfacher und leichter beschaffen sein, da die Kräfte symmetrisch aufgeteilt werden.

Nachfolgend wird die Erfindung anhand eines Ausführungsbeispiels, das in der Zeichnung dargestellt ist, erläutert. Die Zeichnung zeigt als Seitenansicht den vorderen Bereich eines Fahrrades mit dem erfindungsgemäßen Bremstauchausgleich, jedoch ohne Darstellung des Rahmens und des Lenkers.

Die Bremstauchausgleichsvorrichtung umfaßt einen einschenkligen Radführungsträger 3, der in einen oberen Bereich 11 und einen unteren Bereich 12 aufgeteilt ist. Der untere Bereich 12 ist in Fahrtrichtung nach vorn gegenüber dem oberen Bereich 11 abgewinkelt. An das untere Ende des Radführungsträgers 3 ist eine Schwinge 4 angelenkt, die an ihrem anderen Ende eine Radachse 13 für ein Vorderrad 7 aufnimmt. Der Anlenkort der Schwinge 4 mit dem Radführungsträger 3 befindet sich in Fahrtrichtung vor der Radachse 13. Diese Art der Schwinge wird als gezogene Schwinge bezeichnet und zeichnet sich durch besonders leichtes Ansprechen auf Bodenunebenheiten aus.

Vor der Radachse 13 ist das untere Ende eines Federelements 8 angelenkt, das sich nach oben hin koaxial zum oberen Bereich 11 des Radführungsträgers 3 erstreckt und dort in ihm angeordnet ist. Der obere Teil des Federelements 8 ist mit dem Radführungsträger 3 gelenkig verbunden. Das Federelement 8 besitzt ein zusätzliches Dämpferelement.

An der Schwinge 4 ist ferner ein Bremsenträger 1 angeordnet, der im vorliegenden Fall den Bremssattel einer Scheibenbremse trägt. Der Bremsenträger 1 ist um die Radachse 13 schwenkbar und mittels einer Schubstange 2, die zwischen dem Bremsenträger 1 und dem Radführungsträger 3 angelenkt ist, abgestützt. Neben dem dargestellten Anlenkort an dem Radführungsträger können auch noch weitere benachbarte Anlenkorte 10 vorgesehen sein, an denen die Schubstange 2 wahlweise zur Kompensation unterschiedlicher statischer Schwerpunkte angelenkt werden kann.

Die Schubstange 2 schließt mit der Achse der gezogenen Schwinge 4 einen spitzen Winkel α ein. Der Winkel α ist so gewählt, daß innerhalb des gesamten Federungsbereiches der spitze Winkel beibehalten wird. Dadurch kann die Schubstange 2 stets eine Spreizkraft auf den zwischen der Schwinge 4 und dem Radführungsträger 3 eingeschlossenen Winkel β ausüben.

Ferner ist die Schubstange 2 bei statischer Betriebshelastung des Fahrzeugs etwa im rechten Winkel zu einer radial verlaufenden Mittelachse 9 des Bremsenträgers 1 ausgerichtet. Wenn die Ausrichtung beim Ein- und Ausfedern um die tangentiale Lage pendelt, ergibt sich eine hohe Linearität der Wirkung der Bremstauchausgleichsvorrichtung.

Die Bremstauchausgleichsvorrichtung arbeitet wie folgt. Wird die Vorderradbremse betätigt, so wird von der Bremsscheibe 14 auf den Bremsenträger 1 eine Tangentialkraft übertragen und diese über die Schubstange 2 quer in den unteren Bereich 12 des Radführungsträgers 3 eingeleitet. Diese Kraft führt dazu, daß eine Spreizkraft zwischen dem Radführungsträger 3 und der gezogenen Schwinge 4 auftritt, die bestrebt ist, den eingenommenen Winkel β zu vergrößern und dadurch das Federelement 8 zu entlasten. Es ergibt sich somit eine Kraftkomponente 5, die vertikal nach oben gerichtet ist.

Gleichzeitig führt die dynamische Radlastveränderung nach vorn dazu, daß eine Eintauchkraft 6 ausgeübt wird, die bestrebt ist, das Federelement 8 zu stauchen und den Winkel β zwischen dem Radführungsträger 3 und der Schwinge 4 zu verringern. Bei richtiger Abstimmung heben sich diese Kräfte 5, 6 gegenseitig auf, und zwar unabhängig von ihrer absoluten Größe. Dadurch bleibt die Winkellage zwischen der Schwinge 4 und dem Radführungsträger 3 sowie die Position des Federelements 8 konstant. Zusätzliche Kräfte, wie sie beim Überfahren von Bodenunebenheiten auftreten können, bewirken jedoch nach wie vor ein Ein- und Ausfedern der Schwinge 4 und des Federelements 8.

Im Ausführungsbeispiel befindet sich der Anlenkort der Schubstange 2 auf dem Bremsenträger 1 in demselben Abstand, von der Radachse 13, an dem auch die Bremsklötze beim Bremsen an der Bremsscheibe 14 angreifen. Der zwischen der Schubstange 2 und dem Radführungsträger 3 eingeschlossene Winkel ist dabei etwa rechtwinklig. Eine Kompensation der Bremstauchkräfte läßt sich aber auch dann erzielen, wenn der Abstand des Anlenkortes der Schubstange 2 auf dem Bremsenträger 1 von der Radachse 13 vergrößert und der Winkel α zwischen der Schubstange 2 und der Schwinge 4 ebenfalls vergrößert oder umgekehrt der Abstand des Anlenkortes der Schubstange 2 auf dem Bremsenträger 1 von der Radachse 13 verkleinert und der Winkel α zwischen der Schubstange 2 und der Schwinge 4 ebenfalls verkleinert wird.

Die exakte Abstimmung des Abstandes und des Winkels α kann empirisch oder durch Berechnung der Kraftkomponenten unter Einbeziehung der Gesamtkonstruktion des Fahrzeugs berechnet werden.

## Patentansprüche

1. Bremstauchausgleichsvorrichtung in Kombination mit einer Vorderradfederung eines einspurigen Fahrzeugs, bei dem das Vorderrad (7) mit seiner Radachse (13) und einem Bremsenträger (1) an einer gezogenen Schwinge (4) angeordnet sind, die Schwinge (4) mittels eines Federelements (8) an einem Radführungsträger (3) abgestützt ist und vom Bremsenträger (1) beim Bremsen eine Kraft in den Radführungsträger (3) eingeleitet wird, die der Bremstauchkraft entgegengesetzt gerichtet ist, **dadurch gekennzeichnet**, daß zwischen dem Bremsenträger (1) und dem Radführungsträger (3) eine Schubstange (2) gelenkig angeordnet ist, die innerhalb des gesamten Federungsbereiches einen spitzen Winkel (α) mit der Längsachse der gezogenen Schwinge (4) einnimmt, und daß der Abstand des Anlenkortes der Schubstange (2) auf dem Bremsenträger (1) von der Radachse (13) und der Winkel (α) zwischen der Schubstange (2) und der Schwinge (4) so bemessen sind, daß die Bremstauchkräfte kompensiert werden.

2. Bremstauchausgleichsvorrichtung nach Anspruch 1, **dadurch gekennzeichnet**, daß die Schubstange (2) bei statischer Betriebsbelastung des Fahrzeugs etwa im rechten Winkel zu einer radial verlaufenden Mittelachse (9) des Bremsenträgers (1) ausgerichtet ist.

3. Bremstauchausgleichsvorrichtung nach Anspruch 1 oder 2, **dadurch gekennzeichnet**, daß an dem Radführungsträger (3) mehrere Anlenkorte (10) zur wahlweisen Anlenkung der Schubstange (2) vorgesehen sind.

4. Bremstauchausgleichsvorrichtung nach einem der Ansprüche 1 bis 3, **dadurch gekennzeichnet**, daß der Radführungsträger (3) in einen oberen und einen unteren, gegenüber dem oberen Bereich (11) in Fahrtrichtung abgewinkelten Bereich (12) unterteilt ist und das Federelement (8) axial innerhalb des oberen Bereichs (11) angeordnet ist.

5. Bremstauchausgleichsvorrichtung nach einem der Ansprüche 1 bis 4, **dadurch gekennzeichnet**, daß das untere Ende des Federelements (8) an der Schwinge (4) in Fahrtrichtung vor oder hinter der Radachse (13) oder am Bremsenträger (1) angelenkt ist.

6. Bremstauchausgleichsvorrichtung nach einem der Ansprüche 1 bis 5, **dadurch gekennzeichnet**, daß das Federelement (8) zusätzlich ein Dämpfungselement umfaßt.

7. Bremstauchausgleichsvorrichtung nach einem der Ansprüche 1 bis 6, **dadurch gekennzeichnet**, daß das Federelement (8) eine Einstellvorrichtung zur Einstellung einer konstanten Null-Lage in Abhängigkeit unterschiedlicher statischer Betriebsbelastungen umfaßt.

8. Bremstauchausgleichsvorrichtung nach einem der Ansprüche 1 bis 7, **dadurch gekennzeichnet**, daß die Anlenkorte der Schwinge (4) mit dem Radführungsträger (3), des Bremsenträgers (1) mit der Schwinge (4), der Schubstange (2) mit dem Bremsenträger (1) und dem Radführungsträger (3) als Gleit- oder Wälzlager ausgeführt sind.

9. Bremstauchausgleichsvorrichtung nach einem der Ansprüche 1 bis 8, **dadurch gekennzeichnet**, daß der Radführungsträger (3) einschenklig ausgebildet ist.

10. Bremstauchausgleichsvorrichtung nach einem der Ansprüche 1 bis 8, **dadurch gekennzeichnet**, daß der Radführungsträger (3) zweischenklig ausgebildet ist.

## Claims

1. Braking dive compensator in combination with a single track vehicle, in which the front wheel (7) with its axle (13) and a brake support (1) are disposed on a trailing rocker arm (4), the rocker arm (4) is supported by means of a spring element (8) against a wheel guiding support (3) and, when the brakes are applied, a force is transferred from the brake support (1) to the wheel guiding support (3), which force is directed so as to oppose the braking dive force, characterised in that a push rod (2) is disposed in an articulated arrangement between the brake support (1) and the wheel guiding support (3), the said push rod, within the whole of the springing region, forming an acute angle α with the longitudinal axis of the trailing rocker arm (4), and in that the distance of the point of attachment of the push rod (2) on the brake support (1) from the wheel axle (13) and the angle α between the push rod (2) and the rocker arm (4) are dimensioned such that the braking dive forces are compensated.

2. Braking dive compensator according to Claim 1, characterised in that the push rod (2), when the operating load of the vehicle is static, is aligned approximately at a right angle to a radially extending central axis (9) of the brake support (1).

3. Braking dive compensator according to Claim 1 or 2, characterised in that a plurality of attachment points (10) are provided on the wheel-guiding support (3) for the selective attachment of the push rod (2).

4. Braking dive compensator according to one of Claims 1 to 3, characterised in that the wheel guiding support (3) is divided into an upper and a lower region, the lower region (12) being at an angle relative to the upper region (11) in the direction of travel, and the spring element (8) is disposed axially within the upper region (11).

5. Braking dive compensator according to one of Claims 1 to 4, characterised in that the lower end of the spring element is attached to the rocker arm (4) in the direction of travel in front of or behind the wheel axle (13) or to the brake support (1).

6. Braking dive compensator according to one of Claims 1 to 5, characterised in that the spring element (8) additionally comprises a damping element.

7. Braking dive compensator according to one of Claims 1 to 6, characterised in that the spring element (8) comprises an adjustment device for setting a constant zero-position in dependence upon different static operating loads.

8. Braking dive compensator according to one of Claims 1 to 7, characterised in that the points of attachment of the rocker arm (4) to the wheel-guiding support (3), of the brake support (1) to the rocker arm (4), of the push rod (2) to the brake carrier (1) and to the wheel guiding support (3) are constructed as friction or roller bearings.

9. Braking dive compensator according to one of Claims 1 to 8, characterised in that the wheel guiding support (3) is of a single-limbed configuration.

10. Braking dive compensator according to one of Claims 1 to 8, characterised in that the wheel guiding support (3) is of double-limbed configuration.

## Revendications

1. Dispositif compensateur de l'effet de plongée dû au freinage, en combinaison avec un véhicule à voie unique, dans lequel la roue avant (7), avec son axe (13) de roue et un support de frein (1), sont montés sur un bras oscillant tendu (4), dans lequel le bras oscillant (4) est maintenu au moyen d'un élément à ressort (8) contre une fourche (3) et par le support de frein (1), dans lequel, lors du freinage, une force est appliquée à la fourche (3) et est dirigée pour contrecarrer la force de plongée due au freinage, **caractérisé en ce** que, entre le support de frein (1) et la fourche (3), est montée articulée une tige de poussée (2) qui, à l'intérieur de la plage d'amortissement, forme un angle aigu (α) avec l'axe longitudinal du bras oscillant tendu (4), et en ce que la distance du point d'articulation de la tige de poussée (2) sur le support de frein (1) en partant de l'axe (13) de roue et l'angle (α) entre la tige de poussée (2) et le bras oscillant (4) sont dimensionnés de manière que la force de plongée au freinage soit compensée.

2. Dispositif compensateur de l'effet de plongée dû au freinage suivant la revendication 1, **caractérisé en ce** que la tige de poussée (2) est orientée, par charge statique en fonctionnement du véhicule, en faisant à peu près un angle droit avec l'axe central (9), excentré radialement, du support de frein (1).

3. Dispositif compensateur de l'effet de plongée dû au freinage suivant la revendication 1 ou 2, **caractérisé en ce** que, sur la fourche (3), sont prévus plusieurs points d'articulation (10) pour sélecter le point d'articulation de la tige de poussée (2).

4. Dispositif compensateur de l'effet de plongée dû au freinage suivant une des revendications 1 à 3, c**aractérisé en ce** que la fourche (3) est subdivisée en une zone supérieure (11) et une zone inférieure (12) pliée, dans le sens de conduite, par rapport à la zone supérieure (11), et en ce que l'élément à ressort (8) est monté axialement dans la zone supérieure (11).

5. Dispositif compensateur de l'effet de plongée dû au freinage suivant une des revendications 1 à 4, **caractérisé en ce** que l'extrémité inférieure de l'élément à ressort (8) est articulée sur le bras oscillant (4), dans le sens de conduite, devant ou derrière l'axe (13) de roue, ou sur le support de frein (1).

6. Dispositif compensateur de l'effet de plongée dû au freinage suivant une des revendications 1 à 5, **caractérisé en ce** que l'élément à ressort (8) comprend encore un élément d'amortissement.

7. Dispositif compensateur de l'effet de plongée dû au freinage suivant une des revendications 1 à 6, **caractérisé en ce** que l'élément à ressort (8) comprend un dispositif de réglage pour le réglage d'une position zéro constante en fonction de charges de fonctionnement statiques différentes.

8. Dispositif compensateur de l'effet de plongée dû au freinage suivant une des revendications 1 à 7, c**aractérisé en ce** que les points d'articulation du bras oscillant avec la fourche (3), du support de frein (1) avec le bras oscillant (4), de la tige de poussée (2) avec le support de frein (1) et la fourche (3) sont réalisés par des paliers lisses ou à roulement.

9. Dispositif compensateur de l'effet de plongée dû au freinage suivant une des revendications 1 à 8, **caractérisé en ce** que la fourche (3) est formée en une colonne.

10. Dispositif compensateur de l'effet de plongée dû au freinage suivant une des revendications 1 à 8, **caractérisé en ce** que la fourche (3) est formée en deux colonnes.
